# EUROPEAN PATENT APPLICATION

(11) **EP 0 712 956 A1**
(43) Date of publication of application: **22.05.1996**
(21) Application number: 95117817.7
(22) Date of filing: 10.11.1995
(51) Int. Cl.: D06M 23/10, D06M 15/643, D06M 15/693, C09D 183/04, C09D 7/00

(54) **Coating composition for rubber coated fabric**

(30) Priority: 11.11.1994 JP 277318/94
(71) Applicant: TOSHIBA SILICONE CO., LTD., Tokyo 106 (JP)
(72) Inventor: Sato, Hiromi, Iruma-shi, Saitama (JP); Takahashi, Toshihiro, c/o Toshiba Silicone Co, Ltd, Tokyo (JP); Saitoh, Nobuhiro, c/o Toshiba Silicone Co, Ltd, Tokyo (JP)
(74) Representative: Hansen, Bernd, Dr. Dipl.-Chem.

(57) **Abstract**

A coating composition for a rubber coated fabric having an improved feeling by eliminating a sticky feeling of the rubber coated film itself, showing an improved workability at sewing, and further having a blocking preventing effect, comprising a rubber coating composition which comprises a rubber component and a specific volatile siloxane as a solvent, and added thereto a powder of an inorganic compound or an organic compound, having an average particle size of from 0.5 to 20 µm.

## Description

The present invention relates to a coating composition for a rubber coated fabric, and more particularly, to a coating composition suitable for making a rubber coated fabric which reduces the sticky feeling peculiar to rubber, is soft to the touch feel, is excellent in the workability at sewing, and is excellent in the blocking resistance, in conventional clothing sheets, household sheets, partition fire-proof sheets, building sheets, and non-woven fabrics for automobiles, such as air-bag sheets, sheet belts, sheets, etc., prepared by forming a rubber coating film of silicone, urethane, chloroprene, etc., on fabrics of 6,6-nylon, 6-nylon, polyester, etc.

Hitherto, a rubber coated fabric is generally used for forming a rubber coated film on the surface of a fabric. However, since a conventional rubber coated fabric leaves a sticky feeling peculiar to a rubber such as silicone, urethane, chloroprene, etc., used for forming the rubber coated fabric, the workability at cutting or sewing step after coating is greatly poor, and for the improvement, a powder having a good adhesion and a good sliding property, such as talc, etc., is applied onto the surface of the rubber coated film. However, in the method, not only the operation cost is high but also the powder dust gives bad influences on the human body. Also, in the method, since the powder is only adhered to the surface of the rubber coated film, the powder is liable to fall off, whereby the effect of the powder cannot stably be obtained. Also, on the contrary, since in the case of clothing, household furnishings, etc., the powder must be removed after sewing, the blocking prevention and the improvement of the working efficiency by the application of powder are insufficient.

One object of the present invention is to provide a rubber coating composition capable of improving the feeling of a rubber coated film by eliminating the sticky feeling of the rubber coated film itself, improving the sewing workability, and further giving a blocking prevention effect.

Another object of the present invention is to provide an air bag using the rubber coating composition.

As a result of various investigations for attaining the objects described above, the inventor has found that by compounding a rubber coating agent formed onto fibers with an inorganic or organic powder having specific particle sizes together with a specific solvent, a rubber coating composition capable of forming a rubber coating film having no sticky feeling and stably providing improved characteristics for the feeling, the workability, and the blocking prevention effect. The present invention has been accomplished based on this finding.

According to one embodiment of the present invention, there is provided a coating composition for a rubber-coated fabric, comprising a rubber coating composition which comprises a rubber component and a specific solvent, and added thereto a powder of an inorganic compound or an organic compound, having an average particle size of from 0.5 to 20 µm.

According to another embodiment of the present invention, there is provided an air bag formed by sewing an air bag base fabric having formed thereon a cured film of the coating composition.

The present invention is described in detail below.

The inorganic or organic powder used in the present invention is required to have an average particle size of from 0.5 to 20 µm, and preferably from 1.0 to 20.0 µm. If the average particle size of the powder is less than 0.5 µm, in order to remove the tacky feeling it is difficult to obtain the desired effect unless a considerable amount of the powder is added, and the addition of a large amount of the powder tends to weaken the rubber property. On the other hand, if the average particle size is over 20 µm, the coating property becomes poor.

Examples of the inorganic or organic powder are powders of aluminum hydroxide, mica, polymethylsylsesquioxane, carbon, polyamide, and polyfluoroethylene. There is no particular restriction on the form of the powders, but a spherical form is preferred. A flaky powder is liable to weaken the rubber properties.

In particular, the use of a spherical aluminum oxide powder and/or a spherical polymethylsylsesquioxane powder is preferred.

The compounding amount of the powder is from 10 to 80 parts by weight, and preferably from 20 to 50 parts by weight, per 100 parts by weight of the rubber component. If the compounding amount of the powder is less than 10 parts by weight, the effect of the addition of the powder is not obtained, while if the compounding amount is over 80 parts by weight, the effect commensurate with the addition of such a large amount of the powder is not obtained, and the properties of the rubber are also lowered.

The solvent which can be used in the present invention is a cyclic or chain low molecular weight siloxane represented by the following formula (1) and/or (2). The solvent has a large function of uniformly spreading the powder. 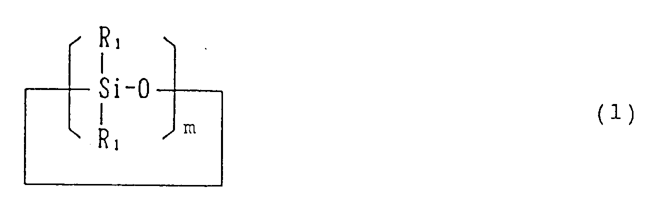
wherein R₁ represents a hydrogen atom or a monovalent hydrocarbon group, and m represents an integer of from 3 to 8. 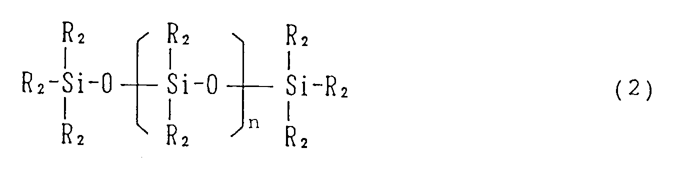
wherein R₂ represents a hydrogen atom or a monovalent hydrocarbon group, and n represents an integer of from 0 to 6.

In the above formulae, R₁ and R₂, which may be the same or different, each represent a hydrogen atom or a monovalent hydrocarbon group. Examples of the hydrocarbon group are an alkyl group such as methyl, ethyl, propyl, etc.; an alkenyl group such as allyl, etc.; and an aryl group such as phenyl, tolyl, etc. The alkyl group is preferably one having 1-5 carbon atoms. In particular, a hydrogen atom or a methyl group is preferred in the points of the ease of the synthesis of the solvent and the ease of the availability of the raw material.

The number m of the repeating unit for the cyclic siloxane represented by the formula (1) above is an integer of from 3 to 8. If m is 9 or more, the volatilization speed of the solvent is low, and thus the removal of the solvent after forming the coating film becomes difficult, which is unsuitable. From the points of the volatilization speed of the solvent and the ease of the synthesis of the solvent, m is preferably an integer of from 3 to 6.

The number n of the repeating unit for the chain siloxane represented by the formula (2) above is an integer of from 0 to 6. If n is 7 or more, the volatilization speed of the solvent is low, and the removal of the solvent after forming the coating film becomes difficult, like the case of the cyclic siloxane as above, which is unsuitable. From the point of the volatilization speed, n is preferably an integer of from 0 to 3.

The amount of the solvent added is from 20 to 400 parts by weight per 100 parts by weight of the organic rubber or inorganic rubber component according to the viscosity of the rubber before diluting, and the viscosity is adjusted to one suitable for the coating method.

There is no particular restriction on the organic rubber or the inorganic rubber used in the present invention, and various well-known rubbers can widely be used. From the weather resistance and the ease of processing, a silicone rubber is preferably used.

Since the rubber coating composition of the present invention comprises an organic or inorganic rubber having added thereto the powder of an inorganic or organic compound having a relatively poor compatibility with the organic or inorganic rubber and the specific solvent, the rubber coating composition is cured, after coating, in the state that the powder of the inorganic or organic compound raises on the surface of the organic or inorganic rubber, whereby the sticky feeling of the surface is reduced, the feeling as clothing is preferable, the workability at sewing is good, and the blocking property occurring when the rubber surfaces are brought into contact with each other is prevented.

The present invention is described below in greater detail by reference to the following examples, but the present invention should not be construed as being limited thereto. Unless otherwise indicated herein, all parts, percents, ratios and the like are by weight.

### PREPARATION EXAMPLE 1

By mixing 100 parts of the main body (A) of a two-component type addition reaction type liquid silicone rubber YE5626 (trade name, made by Toshiba Silicone Co., Ltd.; mechanical properties of the cured rubber: hardness 40, tensile strength 50 kgf/cm², elongation 320%), 10 parts of the curing agent (B), and 0.5 part of an organosilicon compound represented by the structural formula, 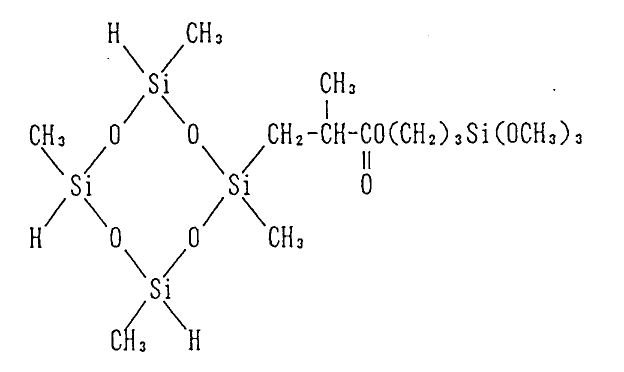
a silicone coating agent A was obtained.

### EXAMPLES 1 TO 10

The silicone coating agent A obtained in Preparation Example 1 was compounded and mixed with each of the various powders and each of the various solvents shown in Table 1 below. Each mixture thus obtained was coated on a 6,6-nylon fabric (420D) such that the amount of the rubber coated was from 60 to 80 g/m².

### COMPARATIVE EXAMPLE 1

The silicone coating agent A only was coated on a 6,6-nylon fabric in the same manner as in Examples 1 to 10 above.

### COMPARATIVE EXAMPLE 2

A mixture of the silicone coating agent A and each of the powders without using the solvent was coated on a 6,6-nylon fabric in the same manner as in Examples 1 to 10 above.

Each of the coated fabrics obtained in Examples 1 to 10 and Comparative Examples 1 and 2 was treated in an oven as shown below, and a fabric having formed thereon a cured silicone coating film was obtained.

### Examples 1 to 10 using the solvents:

| | |
|---|---|
| Primary vulcanization: | 90°C × 2 minutes |
| Secondary vulcanization: | 170°C × 2 minutes |

### Comparative Examples 1 and 2 without using the solvent:

170°C × 2 minutes
The surface sliding property of the surface of each coating film-formed fabric obtained was evaluated by measuring a static friction coefficient (µs) and a kinetic friction coefficient (µk) of the rubber surfaces each other, and the static friction coefficient and the kinetic friction coefficient of the SUS surface and the rubber surface under the following conditions.

### Friction coefficient:

ASTM-D1894
Friction Tester (manufactured by Shimazu Corporation):

| | |
|---|---|
| Weight | 150 g (SUS 304P) |
| Speed | 100 mm/minute |

The impregnating property to a 6,6-nylon fabric with each of the rubber coating agents, the sliding property of each rubber coating agent on a sewing stand, and the adhesion of each rubber coating agent to a glass surface were evaluated.

The impregnating property to the fabric, the sliding property on the sewing stand, and the adhesion to the glass surface were evaluated by the following standard.

### Impregnating property to fabric:

When the mixture obtained by compounding and mixing the silicone coating agent A obtained in Preparation Example 1 with each of the powders shown in Table 1 and each of the solvents shown in Table 1 was coated on a 6,6-nylon fabric such that the amount of the rubber coated was from 60 to 80 g/m², the permeability of the coating agent into the fabric was observed and evaluated by the following three stages.

○: The agent permeates well uniformly from the surface of the fabric to the center thereof.

△: The agent remains many on the surface portion of the fabric and does not permeate sufficiently in the inside of the fabric.

X: The agent remains on the surface portion only of the fabric and does not permeate in the inside of the fabric. Sliding property on the sewing stand:
When each coated fabric was placed on a sewing stand with the rubber-coated surface upper and the fabric was sewed with a machine, the ease of sending the fabric was observed and evaluated by the following three stages.

○: The fabric is sent smoothly.

△: The fabric is sent with resistance a little.

X: Sending of the fabric is resisted.

### Adhesion to glass surface:

The evaluation was made by a method of evaluating the sticky feeling of the rubber-coated surface. That is, the coating film-formed fabric obtained was cut into a size of 100 mm × 200 mm and the rubber-coated surface thereof was closely adhered to a glass plate such that air did not enter. The glass plate was perpendicularly placed and the state of spontaneously falling down the coating film-formed fabric adhered to the glass plate was observed and evaluated by the following three stages.

○: Falling from the glass plate within 3 seconds.

△: Falling from the glass plate in a time of from more than 3 seconds to less than 10 seconds.

X: Falling from the glass plate in 10 seconds or more.

These results obtained are shown in Table 2 below.

**Table 1**

| | Powder | | Solvent | |
|---|---|---|---|---|
| Example 1 | Aluminum hydroxide 5 µm* | 20 parts | Octamethylcyclotetrasiloxane | 20 parts |
| Example 2 | Aluminum hydroxide 5 µm* | 20 parts | Octamethylcyclotetrasiloxane | 20 parts |
| Example 3 | Aluminum hydroxide 5 µm* | 50 parts | Octamethylcyclotetrasiloxane | 20 parts |
| Example 4 | Aluminum hydroxide 5 µm* | 50 parts | Hexamehyldisiloxane | 20 parts |
| Example 5 | Polymethylsylsesquioxane 2 µm* | 50 parts | Octamethylcyclotetrasiloxane | 20 parts |
| Example 6 | Polymethylsylsesquioxane 12 µm* | 20 parts | Octamethylcyclotetrasiloxane | 20 parts |
| Example 7 | Polymethylsylsesquioxane 12 µm* | 50 parts | Octamethylcyclotetrasiloxane | 20 parts |
| Example 8 | Mica powder | 50 parts | Octamethylcyclotetrasiloxane | 20 parts |
| Example 9 | Teflon powder 5 µm* | 50 parts | Octamethylcyclotetrasiloxane | 20 parts |
| Example 10 | Quartz filler 0.5 µm* | 50 parts | Octamethylcyclotetrasiloxane | 20 parts |
| Comparative Example 1 | None | | None | |
| Comparative Example 2 | Aluminum hydroxide 5 µm* | 50 parts | None | |

| | | | | |
|---|---|---|---|---|
| (*): Average particle size | | | | |

**Table 2**

| | Friction Coefficient | | | | (A)* | (B)* | (C)* |
|---|---|---|---|---|---|---|---|
| | µs | | µk | | | | |
| | R-R | R-SUS | R-R | R-SUS | | | |
| Example 1 | 2.435 | 2.223 | 2.425 | 1.870 | ○ | △ | △ |
| Example 2 | 1.354 | 1.380 | 1.310 | 1.255 | ○ | △ | △ |
| Example 3 | 0.960 | 0.400 | 0.833 | 0.350 | ○ | ○ | ○ |
| Example 4 | 0.955 | 0.450 | 0.800 | 0.350 | ○ | ○ | ○ |
| Example 5 | 1.467 | 0.907 | 1.333 | 0.877 | ○ | △ | △ |
| Example 6 | 0.833 | 0.325 | 0.678 | 0.250 | ○ | ○ | ○ |
| Example 7 | 1.007 | 0.378 | 1.000 | 0.333 | ○ | ○ | ○ |
| Example 8 | 1.020 | 0.300 | 0.800 | 0.280 | ○ | ○ | ○ |
| Example 9 | 1.850 | 1.555 | 1.780 | 1.455 | ○ | △ | △ |
| Example 10 | 2.000 | 1.855 | 1.953 | 1.655 | ○ | △ | △ |
| Comparative Example 1 | 2.467 | 2.333 | 2.000 | 1.667 | X | X | X |
| Comparative Example 2 | 1.200 | 0.855 | 1.150 | 0.750 | △-X | △ | ○ |
| (A): Permeability to fabric (B): Sliding property on a sewing stand (C): Adhesion with a glass surface. R-R: Rubber-rubber R-SUS: Rubber-SUS | | | | | | | |

## Claims

1. A coating composition for a rubber-coated fabric comprising a rubber coating composition which comprises a rubber component and a solvent, and added thereto a powder of an inorganic compound or an organic compound, having an average particle size of from 0.5 to 20 µm, wherein said solvent is a volatile siloxane represented by the formula (1) and/or (2); 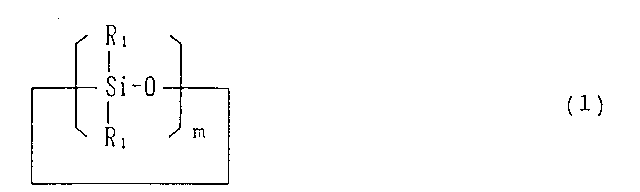 wherein R₁ represents a hydrogen atom or a monovalent hydrocarbon group, and m represents an integer of from 3 to 8; 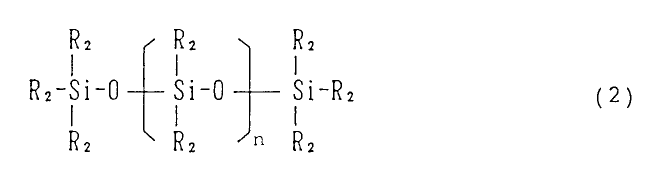 wherein R₂ represents a hydrogen atom or a monovalent hydrocarbon group, and n represents an integer of from 0 to 6.

2. The coating composition as claimed in claim 1, wherein the powder is at least one powder selected from the group consisting of aluminum hydroxide, mica, polymethylsylsesquioxane, carbon, polyamide, and polyfluoroetylene.

3. The coating composition as claimed in claim 1, wherein the powder is at least one powder selected from the group consisting of a spherical aluminum hydroxide powder and a spherical polymethylsylsesquioxane powder.

4. The coating composition as claimed in claim 1, wherein the powder is used in an amount of from 10 to 80 parts by weight per 100 parts by weight of the rubber component.

5. An air bag prepared by sewing an air bag base fabric having formed thereon a cured coating film of the coating composition as claimed in claim 1.
